# EUROPÄISCHE PATENTSCHRIFT

(11) **EP 0 875 682 B1**
(45) Veröffentlichungstag und Bekanntmachung des Hinweises auf die Patenterteilung: **12.06.2002**
(21) Anmeldenummer: 98107216.8
(22) Anmeldetag: 21.04.1998
(51) Int. Cl.: F16C 11/06

(54) **Anschlusseinrichtung**
Connecting device
Dispositif de liaison

(30) Priorität: 02.05.1997 DE 29707930 U
(43) Veröffentlichungstag der Anmeldung: 04.11.1998
(73) Patentinhaber: Dura Automotive Systems GmbH, 40549 Düsseldorf (DE)
(72) Erfinder: Bänsch, Gotthard, 41469 Neuss (DE); Clemens, Markus, 40885 Ratingen (DE)
(74) Vertreter: Paul, Dieter-Alfred, Dipl.-Ing.

(56) Entgegenhaltungen:
- DE-A- 2 838 745
- DE-A- 19 717 446
- US-A- 3 953 139
- US-A- 3 967 907
- US-A- 4 684 279

## Beschreibung

Die Erfindung betrifft eine Anschlußeinrichtung mit einem Anschlußkopf und einem Anschlußendteil, das einen steifen Käfig, eine Lagerpfanne, die in einer Durchgangsöffnung des Käfigs gehalten ist und eine sphärische Aufnahme mit einer Einschuböffnung für den Anschlußkopf bildet, und elastische Haltemittel, die an der Einschuböffnung der Aufnahme vorgesehen sind, um den in die Lagerpfanne eingeschobenen Anschlußkopf in der Aufnahme zu halten, aufweist, wobei die Lagerpfanne zusammen mit den Haltemitteln in der Einschubrichtung des Anschlußkopfes entgegen der Rückstellkraft eines elastischen Elements aus einer Grundstellung in eine Einschubstellung bewegbar ist, in der sich die Haltemittel stärker elastisch aufweiten können als in der Grundstellung.

Zur Verbindung von Betätigungszügen oder Betätigungsgestängen mit zu betätigenden Organen in Kraftfahrzeugen, beispielsweise Vergasern etc., sind Anschlußeinrichtungen bekannt, die gelenkartig ausgebildet sind. Sie bestehen aus einem Anschlußkopf und einem Anschlußendteil. Der Anschlußkopf ist beispielsweise an dem zu betätigenden Organ befestigt und hat Kugelform. Auf diesem Anschlußkopf sitzt eine Lagerpfanne des Anschlußendteils, die innenseitig im wesentlichen komplementär zum Anschlußkopf ausgebildet ist, so daß der Anschlußkopf in der Lagerpfanne formschlüssig aufgenommen ist.

Bei den bekannten Anschlußeinrichtungen ist die Lagerpfanne elastisch aufweitbar ausgebildet, damit der Anschlußkopf in sie eingesteckt werden kann. Dabei muß die Elastizität so groß sein, daß ein Einstecken von Hand oder mit üblichen Hilfsmitteln geschehen kann, also nicht zu große Kräfte überwunden werden müssen. Dies begrenzt allerdings den Halt des Anschlußendteils auf den Anschlußkopf, so daß bei höheren Belastungen die Gefahr besteht, daß sich das Anschlußendteil von dem Anschlußkopf löst.

In der DE-OS 28 38 745 wird daher vorgeschlagen, die Lagerpfanne axial verschiebbar in dem Käfig anzuordnen, wobei sie aus einer Grundstellung, in der sie im wesentlichen formschlüssig vom Käfig umfaßt wird, so daß sie sich nur wenig aufweiten kann, entgegen der Rückstellkraft eines elastischen Elements axial in den Käfig hinein in eine Einschubstellung gedrückt werden kann, in der die Lagerpfanne mehr Platz zum Aufweiten hat. Durch diese Ausbildung wird erreicht, daß die zum Einstekken des Anschlußkopfs in das Anschlußendteil erforderliche Kraft gering ist, da die Lagerpfanne sich in ihrer Einschubstellung leicht aufweiten kann, jedoch die Verbindung nur schwer gelöst werden kann, weil die Lagerpfanne durch die Rückstellkraft des elastischen Elements in ihre Grundstellung zurückgebracht wird, in der eine Aufweitung der Lagerpfanne weitgehend verhindert wird.

Zur Herbeiführung der Rückstellkraft kann bei der bekannten Anschlußeinrichtung die Lagerpfanne entweder selbst elastisch ausgebildet sein, oder es kann an der der Einschuböffnung für den Anschlußkopf gegenüberliegenden Seite ein Federelement vorgesehen sein, das sich zwischen Käfig und Lagerpfanne abstützt. Beide Anordnungen sind jedoch aufgrund der Elastizität in der Bewegungsstrecke instabil und außerdem konstruktiv relativ aufwendig. Weiterhin wird häufig als nachteilig angesehen, daß bei der bekannten Anschlußeinrichtung die Anschlußstange zur Verbindung der Anschlußeinrichtung mit den zu koppelnden Organen der Betätigungszüge bzw. Betätigungsgestänge an dem Käfig angeschweißt werden muß.

Der Erfindung liegt daher die Aufgabe zugrunde, eine Anschlußeinrichtung der eingangs genannten Art so auszubilden, daß sie exzellente Funktionseigenschaften aufweist und gleichzeitig auf einfache Weise mit den zu verbindenden Betätigungszügen oder Betätigungsgestängen verbunden werden kann.

Diese Aufgabe ist erfindungsgemäß dadurch gelöst, daß die Durchgangsöffnung an ihrer der Einschuböffnung gegenüberliegenden Seite durch einen steifen Deckel verschlossen ist, der am Käfig axial verschiebbar geführt ist und mit der Lagerpfanne derart gekoppelt ist, daß Axialbewegungen des einen Bauteils zu entsprechenden Bewegungen des anderen Bauteils führen, und daß Käfig und Deckel in ein elastisches Material eingebettet sind, welches das elastische Element bildet.

Dadurch, daß erfindungsgemäß das elastische Element zur Erzeugung der Rückstellkraft durch die elastische Ummantelung von Käfig und Deckel gebildet wird, können Käfig und Deckel sowie die Lagerpfanne im wesentlichen steif ausgebildet sein, so daß das Anschlußendteil in sich stabil ist und die Axialbewegungen von Lagerpfanne und Deckel optimal geführt werden können. Auβerdem können die Bauteile im Vergleich zu der bekannten Lösung, bei der die Lagerpfanne selbst das elastische Element bildet, konstruktiv einfach gestaltet sein.

Das elastische Material kann in einfacher Weise nach dem Spritzgußverfahren auf die Anordnung aufgebracht werden, nachdem die Lagerpfanne in den Käfig eingesetzt und die der Einschuböffnung gegenüberliegende Seite des Käfigs durch den Dekkel verschlossen worden ist. Dabei kann auch gleichzeitig die Anschlußstange o. dgl. zur Verbindung des Anschlußendteils mit einem Betätigungszug bzw. Betätigungsgestänge mit in das Haterial eingebettet werden, wodurch zusätzliche Schweißvorgänge o. dgl., wie sie im Stand der Technik erforderlich sind, vermieden werden können. Dadurch, daß der Deckel den Käfig an seiner einen Seite vollständig verschließt, wird dabei verhindert, daß elastisches Material in die Lagerpfanne bzw. in den zwischen Lagerpfanne und Käfig gebildeten Spalt eindringt. Außerdem wird erreicht, daß der Deckel flächig an dem elastischen Material anliegen kann, wodurch eine optimale Kraftübertragung vom Lagerkäfig über den Deckel auf das elastische Material und umgekehrt sichergestellt wird.

In vorteilhafter Weise ist der Deckel an der Außenseite des Käfigs verschiebbar geführt, wobei er zweckmäßigerweise den Käfig vollständig umgreift und flächig an diesem anliegt, um eine optimale Führung zu erreichen.

Die an der Einschuböffnung der Lagerpfanne vorgesehenen Haltemittel können einstückig mit der Lagerpfanne ausgebildet sein. Alternativ können auch separate Haltemittel vorgesehen sein, wie es beispielsweise aus der EP 0 493 566 B1 bekannt ist.

Nach einem weiteren Merkmal der Erfindung ist vorgesehen, daß die Aufnahme in der Lagerpfanne einen einschuböffnungsfernen Oberflächenbereich halbkugeliger Kontur aufweist und die Einschuböffnung einen im Vergleich zum Durchmesser der Halbkugelkontur geringeren Durchmesser aufweist und gegenüber einer durch eine Einziehung des Käfig begrenzte Öffnung angeordnet ist, wobei die Außenoberfläche der Lagerpfanne und die Innenoberfläche des Käfigs im Bereich der Einschuböffnung vorzugsweise jeweils komplementäre Kugelstumpfform aufweisen.

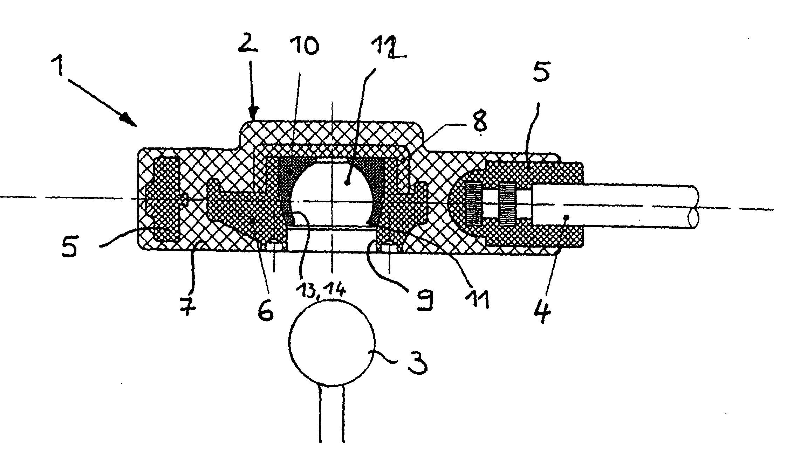

Hinsichtlich weiterer Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt die einzige Figur eine erfindungsgemäße Anschlußeinrichtung in geschnittener Seitenansicht.

Die dargestellte Anschlußeinrichtung 1 besteht im wesentlichen aus einem Anschlußendteil 2 und einem Anschlußkopf 3.

Das Anschlußendteil 2 weist eine Anschlußstange 4 auf, in die an ihrem freien Ende eine nicht dargestellte Sackbohrung eingeformt ist, über die eine Verbindung beispielsweise mit einem Betätigungszug hergestellt werden kann. Auf das andere Ende der Anschlußstange 4 ist ein Anschlußring 5 aus Polyamid aufgespritzt, so daß Anschlußstange 4 und Anschlußring 5 eine starre Verbindung bilden.

In dem Anschlußring 5 sitzt ein Käfig 6, der eine zylindrische Grundform hat. Der Abstand zwischen Anschlußring 5 und Käfig 6 ist von einem elastischen Material 7, insbesondere einem synthetischen Kautschukmaterial, ausgefüllt, das den Anschlußring 5 auch außenseitig umgibt. Die obere Öffnung des Käfigs 6 ist mit einem Deckel 8 aus einem steifen Material verschlossen, welcher auf den Käfig 6 aufgesteckt und an diesem außenseitig axial verschiebbar geführt ist. Der Deckel 8 ist außenseitig ebenfalls von dem elastischen Material 7 umgeben.

In der Durchgangsöffnung 9 des Käfigs 6 ist eine Lagerpfanne 10 gehalten, die eine sphärische Aufnahme 12 für den Anschlußkopf 3 bildet, welche an ihrer Unterseite eine Einschuböffnung 11 aufweist. Die Lagerpfanne 10 ist in der Durchgangsöffnung 9 axial verschiebbar geführt und liegt in ihrer Grundstellung, die in der Figur dargestellt ist, obenseitig am Deckel 8 flächig an und weist untenseitig einen konusförmig zulaufenden Abschnitt 13 auf, der elastisch ausgebildet ist und an einem komplementär ausgebildeten Absatz 14 des Käfigs 6 anliegt.

Der in die Aufnahme 12 der Lagerpfanne 10 einzuführende Anschlußkopf 3 weist einen Durchmesser auf, der zwischen dem Durchmesser der Einschuböffnung 11 und dem maximalen Durchmesser der Aufnahme 12 liegt.

Die Verbindung zwischen Anschlußendteil 2 und Anschlußkopf 3 geschieht wie folgt. Zunächst wird der Anschlußkopf 3 von unten in den Käfig 6 eingeschoben. Dabei übt er eine Druckwirkung auf den vorderen Rand der Lagerpfanne 10 aus, die sich aufgrund der Elastizität des Kautschukmaterials 7 zusammen mit dem Deckel 8 aus der dargestellten Grundstellung nach oben verschieben läßt. Dabei entsteht ein Spalt zwischen dem konusförmig zulaufenden Abschnitt 13 der Lagerpfanne 10 und dem entsprechenden Absatz 14 des Käfigs 6. Dieses Spiel und die Elastizität der Lagerpfanne 10 im Bereich des Abschnitts 13 ermöglichen es dem Anschlußkopf 3, die Lagerpfanne 10 im Bereich der Einschuböffnung 11 soweit zu spreizen, daß der Anschlußkopf 3 in die Aufnahme 12 eingeschoben werden kann.

Nachdem der große Durchmesser des Anschlußkopfs 3 die Einschuböffnung 11 der Aufnahme 12 passiert hat, gelangt der Abschnitt 13 in seine Ausgangsstellung zurück, während sich der Anschlußkopf 3 korrekt in seine Arbeitsstellung in der Lagerpfanne 10 begibt. Wenn dann der Anschlußkopf 3 losgelassen wird, werden durch die Rückstellkraft des elastischen Materials 7 der Dekkel 8 und die Lagerpfanne 10 zusammen mit dem Anschlußkopf 3 in ihre Grundstellung zurückgebracht. Dadurch, daß der Käfig 6, der Deckel 8 und die Lagerpfanne 10 im Bereich der Führungsflächen aus einem steifen Material bestehen und die Anlageflächen zwischen Lagerpfanne 10 und Deckel 8 einerseits und zwischen Deckel 8 und elastischem Material 7 andererseits großflächig sind, ist die Anordnung während der Axialbewegungen sehr stabil und kompakt.

Wenn der Anschlußkopf 3 wieder aus dem Anschlußendteil 2 herausgezogen werden soll, ist hierzu eine größere Kraft als bei der Verbindung der beiden Bauteile erforderlich, da in der dargestellten Grundstellung der elastische Abschnitt 13 der Lagerpfanne 10 nicht radial ausweichen kann, so daß ein sicherer Halt des Anschlußkopfs 3 im Anschlußendteil 2 sichergestellt ist.

Bei der Herstellung des Anschlußendteils 2 wird zunächst die Lagerpfanne 10 von der Seite größeren Durchmessers her in die Durchgangsöffnung 9 des Käfigs 6 eingeschoben und die Einsetzöffnung durch Aufschieben des Deckels 8 auf den Käfig 6 verschlossen. Anschließend wird nach dem Spritzgußverfahren das elastische Material 7 auf die Anordnung gespritzt, wobei gleichzeitig auch die Anschlußstange 4 mit dem Anschlußring 5 in das elastische Material 7 eingebettet wird. Dabei verhindert der Deckel 8 ein Eintreten des Spritzgußmaterials in die Lagerpfanne 10 bzw. in den zwischen Lagerpfanne 10 und Käfig 6 gebildeten Ringspalt.

## Patentansprüche

1. Anschlußeinrichtung mit einem Anschlußkopf (3) und einem Anschlußendteil (2), das einen steifen Käfig (6), eine Lagerpfanne (10), die in einer Durchgangsöffnung (9) des Käfigs (6) gehalten ist und eine sphärische Aufnahme (12) mit einer Einschuböffnung (11) für den Anschlußkopf (3) bildet, und elastische Haltemittel, die an der Einschuböffnung (11) der Aufnahme (12) vorgesehen sind, um den in die Lagerpfanne (10) eingeschobenen Anschlußkopf (3) in der Aufnahme (12) zu halten, aufweist, wobei die Lagerpfanne (10) zusammen mit den Haltemitteln in der Einschubrichtung des Anschlußkopfes (3) entgegen der Rückstellkraft eines elastischen Elements (7) aus einer Grundstellung in eine Einschubstellung bewegbar ist, in der sich die Haltemittel stärker elastisch aufweiten können als in der Grundstellung, **dadurch gekennzeichnet, daß** die Durchgangsöffnung (9) an ihrer der Einschuböffnung (11) gegenüberliegenden Seite durch einen steifen Deckel (8) verschlossen ist, der am Käfig (6) axial verschiebbar geführt ist und mit der Lagerpfanne (10) derart gekoppelt ist, daß Axialbewegungen des einen Bauteils zu entsprechenden Bewegungen des anderen Bauteils führen, und daß Käfig (6) und Deckel (8) in ein elastisches Material (7) eingebettet sind, welches das elastische Element bildet.

2. Anschlußeinrichtung nach Anspruch 1,
**dadurch gekennzeichnet, daß** der Deckel (8) an der Außenseite des Käfigs (6) verschiebbar geführt ist.

3. Anschlußeinrichtung nach Anspruch 1 oder 2,
**dadurch gekennzeichnet, daß** der Deckel (8) den Käfig (6) vollständig umgreift.

4. Anschlußeinrichtung nach einem der Ansprüche 1 bis 3,
**dadurch gekennzeichnet, daß** der Deckel (8) aus Metall oder Kunststoff besteht.

5. Anschlußeinrichtung nach einem der Ansprüche 1 bis 4,
**dadurch gekennzeichnet, daß** der Deckel (8) flächig an der Lagerpfanne (10) anliegt.

6. Anschlußeinrichtung nach einem der Ansprüche 1 bis 5,
**dadurch gekennzeichnet, daß** das Einbettmaterial (7) als synthetischer Kautschuk ausgebildet ist.

7. Anschlußeinrichtung nach einem der Ansprüche 1 bis 6,
**dadurch gekennzeichnet, daß** die Haltemittel an der Lagerpfanne (10) ausgebildet sind.

8. Anschlußeinrichtung nach einem der Ansprüche 1 bis 7,
**dadurch gekennzeichnet, daß** die Aufnahme (12) in der Lagerpfanne (10) einen einschuböffnungsfernen Oberflächenbereich halbkugeliger Kontur aufweist und die Einschuböffnung (11) einen im Vergleich zum Durchmesser der Halbkugelkontur geringeren Durchmesser aufweist und gegenüber einer durch eine Einziehung des Käfigs (6) begrenzten Öffnung angeordnet ist.

9. Anschlußeinrichtung nach den Ansprüchen 7 und 8,
**dadurch gekennzeichnet, daß** die Außenoberfläche der Haltemittel und die Innenoberfläche des Käfigs (6) im Bereich der Einschuböffnung (11) jeweils komplementäre Kegelstumpfform aufweisen.

## Claims

1. Connecting device having a connecting head (3) and a connecting end portion (2) which incorporates a rigid cage (6), a step bearing (10) which is held in a passage (9) running through the cage (6) and constitutes a spherical locator (12) with a push-in opening (11) for the connecting head (3), and flexible retaining means which are provided on the push-in opening (11) of the locator (12) so as to keep the connecting head (3) in the locator (12) when said head (3) is pushed into the step bearing (10), the step bearing (10) being adapted to be moved together with the retaining means in the push-in direction of the connecting head (3) against the restoring force of a flexible element (7), from a basic position into a push-in position in which the retaining means are able to expand flexibly to a greater extent than in the basic position,
**characterised in that** on the side thereof that is opposite the push-in opening (11) the passage (9) is sealed by a rigid cover (8) which is set on the cage (6) so as to be axially displaceable and is coupled to the step bearing (10) in such a way that axial movements of one component lead to corresponding movements of the other component, and that the cage (6) and the cover (8) are embedded in a flexible material (7) which constitutes the flexible element.

2. Connecting device according to claim 1,
**characterised in that** the cover (8) is set so as to be displaceable on the external face of the cage (6).

3. Connecting device according to claim 1 or 2,
**characterised in that** the cover (8) completely encompasses the cage (6).

4. Connecting device according to any of claims 1 to 3, **characterised in that** the cover (8) is made of metal or plastic.

5. Connecting device according to any of claims 1 to 4, **characterised in that** the cover (8) rests over a large surface against the step bearing (10).

6. Connecting device according to any of claims 1 to 5, **characterised in that** the embedding material (7) is in the form of a synthetic rubber.

7. Connecting device according to any of claims 1 to 6, **characterised in that** the retaining means are configured on the step bearing (10).

8. Connecting device according to any of claims 1 to 7, **characterised in that** in the step bearing (10) the locator (12) incorporates a hemispherically contoured surface region which is remote from the push-in opening, and the push-in opening (11) has a smaller diameter compared to the diameter of the hemispherical contour and is arranged opposite an opening delimited by a necked portion of the cage (6).

9. Connecting device according to claims 7 and 8, **characterised in that** in the vicinity of the push-in opening (11) the external surface of the retaining means and the internal surface of the cage (6) respectively have the shape of complementary truncated cones.

## Revendications

1. Dispositif de liaison avec une tête de liaison (3) et un élément terminal de liaison (2), qui comprend une cage rigide (6), une cavité réceptrice (10), qui est maintenue dans une ouverture de passage (9) de la cage (6) et qui forme un réceptacle sphérique (12) avec une ouverture d'introduction (11) pour la tête de liaison (3), ainsi que des éléments de maintien élastiques, qui sont prévus sur l'ouverture d'introduction (11) du réceptacle (12) pour maintenir dans le réceptacle (12) la tête de liaison (3) introduite dans la cavité réceptrice (10), la cavité réceptrice (10) pouvant être déplacée en même temps que les éléments de maintien dans la direction d'introduction de la tête de liaison (3) contre la force de rappel d'un élément élastique (7), et ceci à partir d'une position de base jusque dans une position d'introduction, dans laquelle l'élargissement élastique des éléments de maintien est plus important que dans la position de base, **caractérisé en ce que**, sur son côté opposé à l'ouverture d'introduction (11), l'ouverture de passage (9) est obturée par un couvercle rigide (8), qui est guidé sur la cage (6) avec une possibilité de déplacement axial et qui est accouplé de telle manière avec la cavité réceptrice (10), que des mouvements axiaux de l'un des composants conduisent à des mouvement correspondants de l'autre composant et **en ce que** la cage (6) et le couvercle (8) sont enrobés dans un matériau élastique (7), qui constitue l'élément élastique.

2. Dispositif de liaison selon la revendication 1, **caractérisé en ce que** le couvercle (8) est guidé de manière coulissante sur le côté extérieur de la cage (6).

3. Dispositif de liaison selon la revendication 1 ou 2, **caractérisé en ce que** le couvercle (8) entoure entièrement la cage (6).

4. Dispositif de liaison selon l'une des revendications 1 à 3, **caractérisé en ce que** le couvercle (8) est réalisé en métal ou en matériau synthétique.

5. Dispositif de liaison selon l'une des revendications 1 à 4, **caractérisé en ce que** le couvercle (8) repose sur toute sa surface sur la cavité réceptrice (10).

6. Dispositif de liaison selon l'une des revendications 1 à 5, **caractérisé en ce que** le matériau d'enrobage (7) est réalisé comme caoutchouc synthétique.

7. Dispositif de liaison selon l'une des revendications 1 à 6, **caractérisé en ce que** les éléments de maintien sont formés sur la cavité réceptrice (10).

8. Dispositif de liaison selon l'une des revendications 1 à 7, **caractérisé en ce que** le réceptacle (12) dans la cavité réceptrice (10) présente une zone de surface distante de l'ouverture d'introduction ayant un contour semi-sphérique et **en ce que** l'ouverture d'introduction (11) a un diamètre plus faible par rapport au diamètre du contour semi-sphérique et est disposée en face d'une ouverture limitée par un retrait de la cage (6).

9. Dispositif de liaison selon les revendications 7 et 8, **caractérisé en ce que** la surface extérieure des éléments de maintien et la surface intérieure de la cage (6) ont, dans la zone de l'ouverture d'introduction (11), respectivement une forme complémentaire de moignon de boule.
